# EUROPÄISCHE PATENTSCHRIFT

(11) **EP 2 856 069 B1**
(45) Veröffentlichungstag und Bekanntmachung des Hinweises auf die Patenterteilung: **26.10.2016**
(21) Anmeldenummer: 13720766.8
(22) Anmeldetag: 26.03.2013
(51) Int. Cl.: F41F 3/10, F16F 9/19

(54) **DÄMPFUNGSMODUL UND VERFAHREN ZUM ÜBERTRAGEN EINES KRAFTSTOßES**
DAMPING MODULE AND METHOD FOR TRANSMITTING AN IMPULSE
MODULE D'AMORTISSEMENT ET PROCÉDÉ DE TRANSMISSION D'UNE IMPULSION

(30) Priorität: 24.05.2012 DE 102012010304
(43) Veröffentlichungstag der Anmeldung: 08.04.2015
(73) Patentinhaber: ATLAS ELEKTRONIK GmbH, 28309 Bremen (DE)
(72) Erfinder: SLOTTA, Norbert, 21680 Stade (DE); RADZIWILL, Martin, 23843 Bad Oldesloe (DE)
(74) Vertreter: Weidner Stern Jeschke
(86) Internationale Anmeldenummer: PCT/DE2013/100115
(87) Internationale Veröffentlichungsnummer: WO 2013/174367

(56) Entgegenhaltungen:
- EP-A1- 2 336 019
- DE-A1- 19 743 543
- FR-A5- 2 195 302

## Beschreibung

Die Erfindung betrifft ein Dämpfungsmodul zur Übertragung eines von einer Startvorrichtung ausgeübten Kraftstoßes auf einen Unterwasserlaufkörper sowie ein Verfahren zum Übertragen eines von einer Startvorrichtung ausgeübten Kraftstoßes auf einen Unterwasserlaufkörper.

Herkömmlicherweise werden Unterwasserlaufkörper, wie z.B. Torpedos und Anti-Torpedo-Torpedos, von einer unter der Wasserlinie oder Wasseroberfläche eines Gewässers liegenden Startvorrichtung auf eine Mission in das Gewässer verbracht, wie z.B. aus der EP 2336019 A1. Es sind jedoch auch Ausbringungsverfahren für den Start von Unterwasserlaufkörpern über der Wasseroberfläche mit sogenannten Überwasserstartröhren bekannt. Bei Startvorrichtungen unter der Wasserlinie oder Wasseroberfläche wird der Unterwasserlaufkörper in ein Rohr der Startvorrichtung, das häufig als Ausstoßrohr oder Torpedoausstoßrohr bezeichnet wird, eingeführt und im nächsten Schritt aus dem Ausstoßrohr in das Gewässer ausgestoßen oder beschleunigt. Hierbei sind mehrere Methoden für das Ausstoßen oder für die Beschleunigung bekannt. Es ist z.B. üblich, den Unterwasserlaufkörper mit Druckwasser oder Druckluft aus dem Ausstoßrohr heraus in das Gewässer zu beschleunigen. Es ist außerdem möglich, dass der Unterwasserlaufkörper beim sogenannte "Swim-Out" selbsttätig aus dem Ausstoßrohr herausfährt.

Ferner sind Startvorrichtungen bekannt, die ein, z.B. mit Druckluft angetriebenes, Zylinder-/Kolbensystem oder einen Teleskopzylinder aufweisen. Dieses Zylinder-/Kolbensystem oder dieser Teleskopzylinder ist in dem Ausstoßrohr in Längsrichtung angeordnet, sodass der Unterwasserlaufkörper durch das Ausfahren des Zylinder-/Kolbensystems oder des Teleskopzylinders aus dem Ausstoßrohr heraus in das Gewässer beschleunigt wird. Aufgrund der beschleunigenden Wirkung des Zylinder-/Kolbensystems oder des Teleskopzylinders auf den Unterwasserlaufkörper, wird das Zylinder-/Kolbensystem oder der Teleskopzylinder im folgenden Beschleunigungszylinder genannt.

Zur Beschleunigung des Unterwasserlaufkörpers mit dem Beschleunigungszylinder wird mit dem Beschleunigungszylinder ein Kraftstoß, also eine über einen Zeitraum ausgeübte Kraft mit Betrag und Richtung, erzeugt. Dieser Kraftstoß wird üblicherweise auf den Unterwasserlaufkörper durch Übertragung von einem Ende des Beschleunigungszylinders auf einen Auflagepunkt oder auf eine Auflagefläche des Unterwasserlaufkörpers ausgeübt. Hierbei ist das andere Ende des Beschleunigungszylinders fest mit der Startvorrichtung verbunden. Der Auflagepunkt oder die Auflagefläche entspricht hierbei meist dem Ende der Antriebsachse des Unterwasserlaufkörpers, mit der ein oder mehrere Propeller angetrieben werden. Es sind ferner Unterwasserlaufkörper mit alternativen Antriebssystemen bekannt, bei denen der Kraftstoß des Beschleunigungszylinders auch direkt auf die Hülle des Unterwasserlaufkörpers übertragen wird.

Bei den heute üblichen Startvorrichtungen mit Beschleunigungszylindern wird jedoch der Druck, z.B. für Druckluft, die zum Ausfahren des Beschleunigungszylinders in den Beschleunigungszylinder eingebracht wird, schlagartig, z.B. durch Öffnen eines Ventils, erhöht. Durch das schlagartige Erhöhen des Drucks im Beschleunigungszylinder wird ein Kraftstoß mit einem sprungartig ansteigenden Betrag seiner Kraft zu Beginn des Kraftstoßes erzeugt, der auf den Auflagepunkt oder die Auflagefläche des Unterwasserlaufkörpers ausgeübt wird. Ferner tritt durch Toleranzen der Anordnung des Unterwasserlaufkörpers im Ausstoßrohr häufig ein Spalt zwischen dem Beschleunigungszylinder und dem Unterwasserlaufkörper auf. Da dieser Spalt zu Beginn der Beschleunigungsbewegung des Unterwasserlaufkörpers geschlossen wird, führt ein sprungartig ansteigender Betrag der Kraft zu Beginn des Kraftstoßes zu einem "harten Aufschlagen" des Beschleunigungszylinders auf den Unterwasserlaufkörper. Der Unterwasserlaufkörper muss deshalb, z.B. durch besondere Verstärkung der Achslager der Antriebsachse sowie der Antriebsachse selbst, derartig ausgelegt sein, um diesen sprungartig ansteigenden Betrag der Kraft ohne Beschädigung widerstehen zu können.

Ein Verbringen von Unterwasserlaufkörpern ohne eine derartige verstärkte Ausführung oder Auslegung ist daher mit den Startvorrichtungen mit einem Beschleunigungszylinder nicht möglich. Der Grund hierfür ist, dass durch die Lastspitzen, die durch den sprungartig ansteigenden Betrag der Kraft zu Beginn des Kraftstoßes des Beschleunigungszylinders entstehen, die Gefahr besteht, dass ein Unterwasserlaufkörper ohne derartige Verstärkung bei der Beschleunigung beschädigt wird.

Ein Umbau der bislang eingebauten Startvorrichtungen, z.B. mit einer Druckregelung zur Vermeidung eines sprungartig ansteigenden Betrags der Kraft des Kraftstoßes, wäre zwar möglich, wobei dieser Umbau jedoch sehr aufwendig und vor allem auch sehr teuer wäre.

Der Erfindung liegt daher die Aufgabe zugrunde den Stand der Technik zu verbessern, insbesondere den Start von Unterwasserlaufkörpern, insbesondere auch ohne verstärkte Ausführung oder Auslegung, mit bereits eingebauten Startvorrichtungen mit einem Beschleunigungszylinder zur Beschleunigung des Unterwasserlaufkörpers ohne aufwendigen Umbau der Startvorrichtungen zu ermöglichen, wobei eine Beschädigung des Unterwasserlaufkörpers hierbei gleichzeitig vermieden werden soll.

Die Erfindung löst diese Aufgabe durch ein Dämpfungsmodul zur Übertragung eines von einer Startvorrichtung ausgeübten Kraftstoßes auf einen Unterwasserlaufkörper gemäß Anspruch 1 sowie ein Verfahren zum Übertragen eines von einer Startvorrichtung ausgeübten Kraftstoßes auf einen Unterwasserlaufkörper gemäß Anspruch 6.

Die Erfindung betrifft dazu ein Verfahren zur Übertragung eines Kraftstoßes mit einem Dämpfungsmodul sowie ein Dämpfungsmodul, das in einer Startvorrichtung für Unterwasserlaufkörper einsetzbar ist. Das Dämpfungsmodul dient eingesetzt in der Startvorrichtung zur Übertragung eines von der Startvorrichtung, insbesondere von einem Beschleunigungszylinder der Startvorrichtung, ausgeübten Kraftstoßes auf einen Unterwasserlaufkörper. Ein Beschleunigungszylinder ist hierbei z.B. ein Zylinder-/Kolbensystem oder ein Teleskopzylinder, das oder der z.B. durch Druckluft angetrieben wird. Ein Kraftstoß bezeichnet gemäß der bekannten Definition eine Kraft mit konstantem oder variierendem Betrag und konstanter oder variierender Richtung, die von einem ersten Körper erzeugt und für die Dauer einer bestimmten Zeit, also einem Zeitraum, auf einen anderen Körper ausgeübt wird.

Der Bereich, an dem die Kraft des übertragenen Kraftstoßes auf den Unterwasserlaufkörper wirkt, wird im Folgenden als Auflagepunkt bezeichnet, wobei diese Bezeichnung keine geometrische Einschränkung auf einen Punkt bedeutet, sondern auch mehrere Auflagepunkte und/oder eine oder mehrere Auflageflächen umfasst. Der Angriffspunkt des Unterwasserlaufkörpers ist vorzugsweise die Hülle des Unterwasserlaufkörpers oder die Antriebswelle der Antriebsschraube oder Antriebsschrauben oder des oder der Propeller des Unterwasserlaufkörpers.

Das Dämpfungsmodul weist zur Übertragung des Kraftstoßes einen Zylinder, einen Kolben und mindestens ein, d.h. ein oder mehrere, Fluidverbindungsmittel auf. Der Kolben ist beweglich im Zylinder angeordnet, sodass eine Kammer im Zylinder gebildet wird, die durch den Kolben begrenzt wird. Der Zylinder und der Kolben bilden daher gemeinsam ein Zylinder-/Kolbensystem. Die Kammer des Zylinder-/Kolbensystems ist durch eine oder mehrere Fluidverbindungen, die mit dem oder die jeweils mit einem der Fluidverbindungsmittel herstellbar sind, mit der äußeren Umgebung des Zylinder-/Kolbensystems oder des Dämpfungsmoduls verbindbar. Abgesehen von den Fluidverbindungen ist die Kammer im Zylinder-/Kolbensystems von der äußeren Umgebung durch die Formschlüssigkeit des Kolbens im Zylinder weitestgehend abgetrennt. Durch Bewegungen des Kolbens im Zylinder ist das Volumen der Kammer veränderbar.

Das Volumen der Kammer wird durch Einfahren des Kolbens in den Zylinder verringert, wenn eine Kraft auf das Zylinder-/Kolbensystem in Bewegungsrichtung oder Wirkrichtung des Zylinder-/Kolbensystems ausgeübt wird. Aufgrund der Verringerung des Volumens wird der Kammerinnendruck erhöht, wobei dieser durch einen Volumenstrom durch eine oder mehrere mit dem oder den Fluidverbindungsmitteln hergestellte Fluidverbindungen wieder reduziert wird. Hierbei sind die Fluidverbindungsmittel derart ausgelegt, um den Volumenstrom unterhalb von einem vorbestimmten Grenzwert zu halten. Dies wird z.B. durch einen vorbestimmten Querschnitt des oder der Fluidverbindungsmittel für ein vorbestimmtes Fluid, z.B. Wasser, erreicht.

Dank der Erfindung werden Lastspitzen bei der Ausübung eines von einer Startvorrichtung erzeugten Kraftstoßes auf einen Unterwasserlaufkörper gedämpft. Ein sprungartig ansteigender Betrag der Kraft des Kraftstoßes zu Beginn des Kraftstoßes wird somit abgeflacht oder gedämpft, sodass auf den Auflagepunkt des Unterwasserlaufkörpers lediglich ein Kraftstoß mit gemäßigt ansteigendem Betrag seiner Kraft wirkt oder ausgeübt wird. Ein "hartes Aufschlagen" des Beschleunigungszylinders auf den Unterwasserlaufkörper beim Schließen eines Spalts zwischen dem Beschleunigungszylinder und dem Unterwasserlaufkörper wird verhindert.

Diese Dämpfung erfolgt, indem das Dämpfungsmodul zwischen dem Beschleunigungszylinder der Startvorrichtung und dem Unterwasserlaufkörper angeordnet wird oder ist, sodass eine Veränderung des Betrags der Kraft der Kraftstoßes, insbesondere zu Beginn der Beschleunigung des Unterwasserlaufkörpers durch das Dämpfungsmodul "geglättet" wird.

Ein weiterer Vorteil der Erfindung ist, dass durch die Fluidverbindungen, z.B. beim Fluten des Ausstoßrohrs, vor dem Starten des Unterwasserlaufkörpers das sich in der Umgebung befindende Fluid, z.B. Wasser oder Seewasser, in die Kammer laufen kann und dort als Medium für die Dämpfung oder zum Betreiben des Kolben-/Zylindersystems benutzt werden kann. Ohnehin ist beim Betrieb des Dämpfungsmoduls in einem Gewässer der Einsatz von Wasser oder Seewasser im Vergleich zu Öl oder einem anderen Medium in der Kammer vorteilhaft, da ein Dämpfungsmodul, das mit Öl betrieben wird, auslaufen und somit die Umwelt belasten könnte. Gase wie etwa Luft sind hingegen nicht zum Einsatz in der Kammer des Zylinder-/Kolbensystems geeignet, da das Kompressionsmodul derartiger Fluide so gering ist, dass keine ausreichende Dämpfung mit dem Dämpfungsmodul erzeugt würde.

Gemäß einer weiteren vorteilhaften Weiterbildung der Erfindung ist das mindestens eine Fluidverbindungsmittel derart im Dämpfungsmodul angeordnet, dass die Fluidverbindung oder die Fluidverbindungen durch vorbestimmte Positionen des Kolbens im Zylinder vermindert, also teilweise unterbrochen, werden. Die Positionen des Kolbens im Zylinder, bei denen die Fluidverbindung oder Fluidverbindungen vermindert oder verkleinert werden, sind hierbei also von der Anordnung des mindestens einen Fluidverbindungsmittels abhängig. Wird nämlich beim Einfahren des Kolbens in den Zylinder eine vorbestimmten Einfahrtiefe erreicht und nimmt der Kolben Positionen oberhalb der vorbestimmten Einfahrtiefe an, so wird die oder werden die Fluidverbindungen immer weiter vermindert, bis der Kolben an einem Anschlag im Zylinder aufliegt. Die Einfahrtiefe ist umgekehrt proportional zum Volumen der Kammer. Einfahrtiefe oberhalb der vorbestimmten Einfahrtiefe bedeutet demnach Volumen der Kammer unter einem vorbestimmten Wert.

Durch eine derartige Anordnung der Fluidverbindungsmittel ist gewährleistet, dass sich die Dämpfungswerte des Dämpfungsmoduls beim Einfahren des Kolbens in den Zylinder gleichmäßig erhöhen, sodass eine Beschädigung des Kolbens oder des Zylinders durch "hartes Aufschlagen" des Kolbens im Zylinder verhindert wird.

Gemäß einer weiteren vorteilhaften Weiterbildung der Erfindung weist das Dämpfungsmodul eine Verbindungsvorrichtung zum lösbaren Verbinden des Dämpfungsmoduls mit der Startvorrichtung auf. Die Verbindungsvorrichtung ist dabei Bestandteil des Dämpfungsmoduls und dient der temporären Verbindung des Dämpfungsmoduls mit der Startvorrichtung, insbesondere mit einem Ende oder dem freien Ende des Beschleunigungszylinders der Startvorrichtung.

Die Verbindungseinrichtung ist vorteilhaft, da ein Dämpfungsmodul somit mehrfach eingesetzt werden kann. Bei der Verbringung des Unterwasserlaufkörpers wird nämlich durch den Kraftstoß neben dem Unterwasserlaufkörper auch das Dämpfungsmodul beschleunigt. Nach Beendigung des Kraftstoßes würde dann ohne Verbindungseinrichtung das Dämpfungsmodul durch den Impuls, den das Dämpfungsmodul nach der Beschleunigung aufweist, zusammen mit dem Unterwasserlaufkörper in das Gewässer verbracht werden, wodurch eine weitere Nutzung des Dämpfungsmoduls unmöglich wäre.

Gemäß einer weiteren vorteilhaften Weiterbildung der Erfindung weist die Verbindungsvorrichtung einen Aufbau auf, der es gestattet, dass das Dämpfungsmodul abhängig von seiner Position, z.B. im Ausstoßrohr, eine Verbindung mit der Startvorrichtung eingeht oder eine derartige Verbindung löst. Im Falle eines Dämpfungsmoduls, das aus einer als Ruhestellung bezeichneten Position gebracht wird, wird dann eine Verbindung mit einer sich im Bereich der Verbindungsvorrichtung befindenden Startvorrichtung hergestellt. Diese Ruhestellung ist z.B. die Position des Dämpfungsmoduls, die das Dämpfungsmodul nach Einführen unmittelbar nach oder mit dem Unterwasserlaufkörper im Ausstoßrohr einnimmt. Wird nun während eines Startvorgangs das Dämpfungsmodul aus seiner Ruhestellung bewegt, so geht dieses mittels der Verbindungseinrichtung eine Verbindung mit der Startvorrichtung, insbesondere mit einem Ende oder einem freien Ende des Beschleunigungszylinders der Startvorrichtung, ein.

Ferner wird im Falle eines in den Bereich der Ruhestellung zurückgebrachten Dämpfungsmoduls die hergestellte Verbindung wieder gelöst. Hier ist es denkbar, dass der Beschleunigungszylinder mit dem Dämpfungsmodul nach dem Verbringen des Unterwasserlaufkörpers wieder in die Ruhestellung zurück gebracht wird und sich dort die mittels der Verbindungseinrichtung hergestellte Verbindung selbständig löst.

Aufgrund einer derartig ausgebildeten Verbindungseinrichtung ist das Dämpfungsmodul modular einsetzbar, d.h. das Dämpfungsmodul muss nicht mit der Startvorrichtung fest verbunden sein, um dadurch zu verhindern, dass dieses bei der Beschleunigung mit dem Unterwasserlaufkörper in ein Gewässer verbracht wird. Eine feste Verbindung würde nämlich einen umfassenden Umbau üblicher Startvorrichtungen, die Beschleunigungszylinder aufweisen, erfordern. Der Grund dafür ist, dass der Beschleunigungszylinder meist zentral in einer Deckelfläche des Ausstoßrohrs der Startvorrichtungen angebracht ist und diese Deckelfläche gleichzeitig als eine Art Tür, die auch als Ladeluke bezeichnet wird, dient. Diese Ladeluke ist dazu mit Hilfe eines Scharniers am Ausstoßrohr befestigt, um die Ladeluke zum Einbringen des Unterwasserlaufkörpers in das Ausstoßrohr wegzuklappen und nach dem Einbringen wieder zu schließen.

Wird demnach davon ausgegangen, dass auf den o.g. Umbau bei üblichen Startvorrichtungen verzichtet werden soll, so müsste das Dämpfungsmodul ohne die erfindungsgemäße Verbindungsvorrichtung auf der Innenseite der Ladeluke oder dieser Tür oder Deckelfläche fest mit dieser verbunden sein. Dies würde dann bei den üblichen nicht umgebauten Startvorrichtungen dazu führen, dass die Ladeluke nicht geöffnet und geschlossen werden kann, da sich das Dämpfungsmodul hierbei mit dem Mantel oder der Hülle des Ausstoßrohrs verkanten würde. Ferner wäre es auch nicht möglich das Dämpfungsmodul nach dem Schließen der Ladeluke mit dem Beschleunigungszylinder zu verbinden, da ein Eingriff in das Innere des Ausstoßrohrs zum Verbinden in üblichen Startvorrichtungen nicht vorgesehen ist. Ohne eine derartige Verbindung wäre dann jedoch keine Wiederverwendung des Dämpfungsmoduls möglich, da dieses am Ende der Beschleunigungsbewegung mit dem Unterwasserlaufkörper zusammen aus dem Ausstoßrohr ausgestoßen würde.

Gemäß einer weiteren vorteilhaften Weiterbildung der Erfindung weist das Dämpfungsmodul mindestens ein Paar, d.h. ein oder mehrere Paare, Fluidverbindungsmittel auf, mit denen Fluidverbindungen zwischen der Kammer und der Umgebung des Dämpfungsmoduls hergestellt werden. Außerdem sind die Fluidverbindungsmittel des Paares oder jedes der Paare von Fluidverbindungsmitteln an oder jeweils an zueinander gegenüberliegenden Seiten der Kammer angeordnet.

Durch die paarweise in der Kammer gegenüberliegende Anordnung der Fluidverbindungsmittel wird ein vollständiges Befüllen mit einem Fluid oder ein Ablassen eines Fluids möglich. Durch Positionierung des Dämpfungsmoduls im Ausstoßrohr, derart dass ein Paar von Fluidverbindungsmitteln auf einer Senkrechten durch den Mittelpunkt des Zylinders des Dämpfungsmoduls liegt, wird beim Fluten des Ausstoßrohres mit Seewasser gleichzeitig ein Befüllen der Kammer mit dem Seewasser ohne zurückbleibende Luft in der Kammer möglich. Gleiches gilt beim Abpumpen des Seewassers aus dem Ausstoßrohr.

Gemäß einer weiteren vorteilhaften Weiterbildung der Erfindung weist das mindestens eine Fluidverbindungsmittel eine Filtereinrichtung zum Filtern von sich in der Umgebung befindenden Verunreinigungen des Fluids vor oder während des Hineinfließens des Fluids aus der Umgebung in die Kammer auf.

Durch diese Filtereinrichtung wird verhindert, dass z.B. Sand, Schlamm oder feine Steine durch die Fluidverbindungsmittel in die Kammer gelangen, sich dort Sammeln und sich beim späteren Einsatz des Dämpfungsmodul z.B. in den Fluidverbindungsmitteln verkanten und dadurch den Volumenstrom durch die Fluidverbindungen beeinflussen. Ferner sind der Kolben und der Zylinder mit einer Gleitbeschichtung versehen, um ein Verkannten oder Einfräsen des Klobens in den Zylinder zu verhindern.

Gemäß einer weiteren vorteilhaften Weiterbildung der Erfindung weist das Dämpfungsmodul eine Rückstellfeder auf. Diese Rückstellfeder ist entweder innerhalb der Kammer oder außerhalb der Kammer angeordnet und dient zum Ausfahren des Kolbens aus dem Zylinder bis zu einer Rückstelllage. Dieses Ausfahren in die Rückstelllage erfolgt durch die Rückstellfeder bei fehlender Kraftausübung, also nach Beendigung oder vor Beginn des Kraftstoßes, auf das Zylinder-/Kolbensystem. Durch das Ausfahren wird eine Füllung der Kammer des Dämpfungsmoduls in der Rückstelllage mit einem Fluid gewährleistet.

Die Rückstellfeder kann zudem einen Toleranzausgleich gewährleisten. Torpedos und Torpedorohre weisen häufig Längstoleranzen zwischen 1mm und 10mm auf. Ohne Rückstellfeder könnte es passieren, dass die Luke nicht mehr geschlossen werden kann oder eine kraftschlüssige Verbindung zwischen dem teleskopartig ausgestalteten Auswurfmechanismus, welcher insbesondere in der Luke angeordnet ist, und dem Dämpfungsmodul nicht bereitgestellt werden kann. Somit kann die Rückstellfeder einen Toleranzausgleich und eine kraftschlüssige Kraftübertragung bewirken.

Auch kann beim Übergang der einzelnen Teleskopsegmente ein Kraftschluss durch die Rückstellfeder ermöglicht werden.

Weitere vorteilhafte Ausführungsformen ergeben sich aus den Unteransprüchen sowie aus den anhand der Zeichnung näher erläuterten Ausführungsbeispielen. Es zeigen:
- Fig. 1: eine Schnittdarstellung eines Ausführungsbeispiels eines Dämpfungsmoduls zur Übertragung eines von einer Startvorrichtung ausgeübten Kraftstoßes auf einen Unterwasserlaufkörper,
- Fig. 2: eine Schnittdarstellung einer Startvorrichtung mit Beschleunigungszylinder, ein Ausführungsbeispiel des Dämpfungsmoduls sowie einen Unterwasserlaufkörper in einem Ausstoßrohr der Startvorrichtung mit einer geöffneten Ladeluke,
- Fig. 3: die Schnittdarstellung aus Fig. 2 mit einer geschlossenen Ladeluke,
- Fig. 4: die Schnittdarstellung aus Fig. 3 mit einer geöffneter Abschussluke und
- Fig. 5: die Schnittdarstellung aus Fig. 4 mit einem Unterwasserlaufkörper, der mit dem Beschleunigungszylinder im Ausstoßrohr beschleunigt wird.

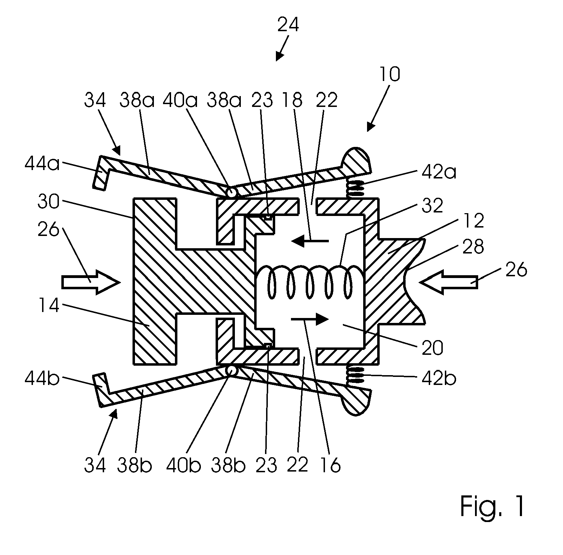

Fig. 1 zeigt eine Schnittdarstellung eines Ausführungsbeispiels eines Dämpfungsmoduls 10 zur Übertragung eines von einer Startvorrichtung erzeugten Kraftstoßes auf einen Unterwasserlaufkörper. Das Dämpfungsmodul weist einen Zylinder 12 und einen Kolben 14 auf, wobei der Kolben 14 in Richtung 16 in den Zylinder einfahren und in Richtung 18 aus dem Zylinder 12 herausfahren kann. Der Zylinder 12 und der Kolben 14 bilden ein Zylinder-/Kolbensystem und umschließen eine Kammer 20.

Der Zylinder 12 weist ein Paar, also zwei, Fluidverbindungsmittel 22 auf. Die Fluidverbindungsmittel 22 sind an zueinander gegenüberliegenden Seiten der Kammer angeordnet und ermöglichen eine Fluidverbindung zwischen der Umgebung 24 des Dämpfungsmoduls 10 und der Kammer 20. Weitere Fluidverbindungen zwischen der Umgebung 24 des Dämpfungsmoduls 10 und der Kammer 20 werden durch eine Dichtung 23 weitestgehend verhindert. Ein sich in der Umgebung 24 befindendes Fluid, wie z.B. Wasser oder Seewasser, kann daher mittels der mit den Fluidverbindungsmitteln 22 geschaffenen Fluidverbindungen von der Umgebung 24 in die Kammer 20 oder von der Kammer 20 in die Umgebung 24 fließen.

Wird eine Kraft 26 auf das Zylinder-/Kolbensystem, also auf eine Fläche 28 und eine Fläche 30 des Zylinder-/Kolbensystems, ausgeübt, so fährt der Kolben 14 in den Zylinder 12 ein und der Druck in der Kammer 20 erhöht sich, sodass ein sich in der Kammer befindendes Fluid durch die mit den Fluidverbindungsmitteln 22 geschaffenen Fluidverbindungen von der Kammer 20 in die Umgebung 24 des Dämpfungsmoduls 10 fließt. Das Fluid fließt hierbei mit einem Volumenstrom, der abhängig vom in der Kammer erzeugten Druck sowie der Ausbildung, insbesondere der Querschnittsfläche, der Fluidverbindungsmittel 22 ist. Die Fluidverbindungsmittel 22 weisen hier zur besseren Ansicht einen zum Kammervolumen der Kammer 20 verhältnismäßig großen Durchmesser auf, der bei einem realen Dämpfungsmodul sehr viel kleiner ist, um eine im Folgenden beschriebene "Drosselwirkung" zu erzielen.

Der Volumenstrom steigt durch die zeitliche Volumenänderung der Kammer 20, die durch die ausgeübte Kraft 26 erfolgt, bis zu einem von der Ausbildung der Fluidverbindungsmittel 22 abhängigen Wert, der unter einem vorbestimmten Grenzwert liegt. Hierbei stellt sich ein Kammerinnendruck ein, der von der ausgeübten Kraft 26 sowie dem Volumenstrom abhängig ist. Ein Kraftstoß, also eine zeitlich auf das Zylinder-/Kolbensystem ausgeübte Kraft 26, führt also nach kurzzeitiger Beschleunigung bei der Einfahrbewegung zu einem im Wesentlichen gleichmäßigen Einfahren des Kolbens 14 in den Zylinder 12. Wird demnach ein Kraftstoß mit einem sprungartig ansteigenden Betrag seiner Kraft zu Beginn des Kraftstoßes auf eine Fläche der Flächen 28 oder 30 ausgeübt, so wird diese Kraft auf die jeweils andere Fläche der Flächen 28 oder 30 derart übertragen, sodass mit der anderen Fläche ein übertragener Kraftstoß mit einer gedämpften oder geglätteten, also sich langsamer ändernden, Kraft auf einen Gegenstand ausgeübt werden kann.

Durch die besondere Ausformung des Kolbens 14 sowie die Anordnung der Fluidverbindungsmittel 22 vermindert oder verkleinert der Kolben die Querschnittsfläche der Fluidverbindungsmittel 22 ab einer bestimmten Einfahrtiefe in den Zylinder 12. Somit wird gewährleistet, dass ab dieser bestimmten Einfahrtiefe die Fluidverbindungen vermindert werden und somit das Fluid mit einem immer geringer werdenden Volumenstrom aus der Kammer 20 in die Umgebung 24 fließen oder entweichen kann. Hierdurch nimmt der Dämpfungsgrad oder nehmen die Dämpfungswerte des Dämpfungsmoduls ab der bestimmten Einfahrtiefe des Kolbens 14 in den Zylinder 12 immer weiter zu. Geht man von einem Fluid mit einem hohen Kompressionsmodul, wie z.B. Wasser oder Seewasser, in der Kammer 20 aus, so wird dadurch ein "hartes Aufschlagen" des Kolbens 14 auf den Zylinder verhindert.

Ferner weist das Dämpfungsmodul 10 eine Rückstellfeder 32 auf, mit der der Kolben 14 wieder aus dem Zylinder in Richtung 18 herausgefahren wird, wenn keine Kraft 26 auf die Flächen 28 und 30 ausgeübt wird. Die Rückstellfeder 32 fährt den Kolben 14 bis in eine durch die Form des Zylinders 12 und den Kolben 14 vorgegeben Rückstellage.

Durch die Rückstellfeder 32 und einem veränderbaren Spalt erfolgt ein Toleranzabgleich. Typischer Weise weist eine Spaltbreite einen Wert von 1mm bis 10mm auf. Beim Schließen der Ladeluke 54 wird gegen die Rückstellfeder 32 die Spaltbreite geändert, wodurch Toleranzen ausgeglichen werden.

Zudem presst die Rückstellfeder 32 den Kolben 14 gegen den teleskopmäßig ausgestalteten Beschleunigungszylinder 48. Dadurch ist eine kraftschlüssige Verbindung von Beschleunigungszylinder 48, Dämpfungsmodul 10 und Torpedo 50 gegeben. Insbesondere bei einem Übergang der einzelnen Teleskopsegmente kann ein Hämmern zwischen dem Beschleunigungszylinder 48 und dem Kolben 14 minimiert oder verhindert werden.

In der Rückstellage des Kolbens 14 sind durch die Fluidverbindungsmittel 22 immer Fluidverbindungen zwischen der Umgebung 24 und der Kammer 20 vorhanden. Geht man dann vom Einsatz des Dämpfungsmoduls 10 in einem Ausstoßrohr unter der Wasseroberfläche oder der Wasserlinie eines Gewässers aus, so befüllt sich die Kammer 20 beim Fluten des Ausstoßrohrs mit dem Wasser oder Seewasser in der Umgebung 24 durch die Fluidverbindungen bei nicht ausgeübter Kraft 26. Beim Abpumpen des Wassers aus dem Ausstoßrohr läuft auch das sich in der Kammer 20 befindende Wasser durch die Fluidverbindungen in die Umgebung 24 hinaus. Durch in der Kammer 20 gegenüberliegende Fluidverbindungsmittel 22 im oberen und im unteren Bereich des Dämpfungsmoduls 10 ist ein Hineinfließen und Herausfließen des Wassers möglich, ohne dass Luftblasen nach dem Hineinfließen oder Wasserreste nach dem Herausfließen in der Kammer 20 verbleiben.

Ferner weist das Dämpfungsmodul 10 eine Verbindungsvorrichtung 34 auf. Die Verbindungsvorrichtung weist hier zwei Verbindungsmittel auf. Es sind jedoch auch anders ausgebildete Verbindungsvorrichtungen 34, z.B. mit nur einem oder mehr als zwei Verbindungsmitteln möglich. Die Verbindungsmittel bestehen jeweils aus einem abgewinkelten Stab 38a, 38b, der in seinem Winkel mit einem Lager 40a, 40b nach Art eines Linienkipplagers mit dem Dämpfungsmodul 10 gelagert verbunden ist. Jeder Stab 38a, 38b wird jeweils über eine an einem ersten Ende des Stabs angeordnete Feder 42a, 42b vom Dämpfungsmodul 10 abgestoßen. Durch Abstoßen der ersten Enden der Stäbe 38a, 38b werden die zweiten Enden der Stäbe 38a, 38b, die jeweils einen Haken 44a, 44b aufweisen aufeinander zu, also in Richtung zueinander, bewegt. Somit würde ein Gegenstand, der sich im Bereich der Fläche 30 des Kolbens befindet, von den Haken 44a und 44b festgehalten und dadurch eine Verbindung zwischen diesem Gegenstand und dem Dämpfungsmodul 10 hergestellt werden.

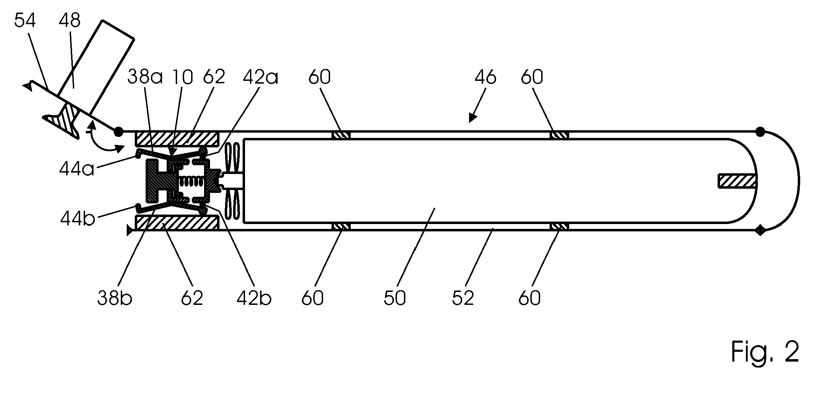

Fig. 2 zeigt eine Schnittdarstellung einer bekannten Startvorrichtung 46 mit einem Beschleunigungszylinder 48, einem Ausführungsbeispiel des Dämpfungsmoduls 10 und einem Unterwasserlaufkörper 50 in einem Ausstoßrohr 52 der Startvorrichtung mit einer geöffneten Ladeluke 54 der Startvorrichtung. Das Dämpfungsmodul 10 entspricht dem Dämpfungsmodul aus Fig. 1, wobei zur besseren Übersichtlichkeit in Fig. 2 und auch in den weiteren Figuren darauf verzichtet worden ist, sämtliche in der Fig. 1 dargestellte Bezugsziffern erneut darzustellen.

Die Ladeluke 54 ist um ein Gelenk 56 in Pfeilrichtung 58 schwenkbar, um, wie im dargestellten Fall, bei geöffneter Ladeluke einen Zugang zum Ausstoßrohr 52 der Startvorrichtung 46 zu haben. Durch diesen Zugang wird das Ausstoßrohr 52 mit dem Unterwasserlaufkörper 50 bestückt oder der Unterwasserlaufkörper 50 in das Ausstoßrohr 52 eingeführt. Der Unterwasserlaufkörper 50 wird dabei vorzugsweise durch Haltemittel 60 zentriert in dem Ausstoßrohr 52 gehalten.

Nachdem der Unterwasserlaufkörper 50 in das Ausstoßrohr 52 verbracht worden ist, wird das Dämpfungsmodul 10 mit Abstandshaltemitteln 62 in das Ausstoßrohr 52 verbracht. Dank der Abstandshaltmittel 62 wird das Dämpfungsmodul 10 zentriert in dem Ausstoßrohr 52 gehalten und dabei die abgewinkelten Stäbe 38 an Ihren ersten Enden jeweils in eine der Federn 42 gedrückt, sodass die Haken 44 der abgewinkelten Stäbe 38 auseinander gedrückt werden.

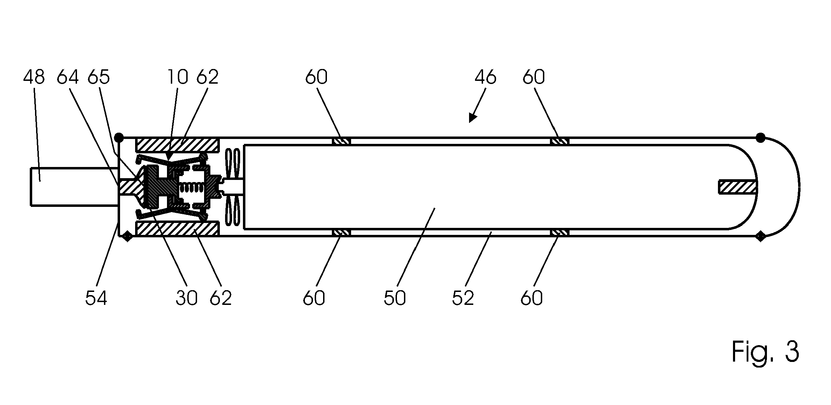

Fig. 3 zeigt wieder die Schnittdarstellung der Startvorrichtung 46 aus Fig. 2, wobei nun die Ladeluke 54 geschlossen ist. Ein Schließen und ein späteres Öffnen der Ladeluke 54 wäre nicht möglich, wenn das Dämpfungsmodul bei der hier angenommenen üblichen, nicht umgebauten Startvorrichtung fest mit dem Beschleunigungszylinder 48 oder genauer gesagt, mit einem freien Ende 65 einer Kolbenstange 64 des Beschleunigungszylinders 48 verbunden wäre.

Das freie Ende 66 der Kolbenstange 64 des Beschleunigungszylinders 48 liegt nun bei geschlossener Ladeluke 54 an der Fläche 30 des Kolbens 14 des Dämpfungsmoduls 10 an. Ferner ist durch Toleranzen der Anordnung des Unterwasserlaufkörpers 50 im Ausstoßrohr 52 auch ein Spalt zwischen dem freien Ende 66 der Kolbenstange 64 des Beschleunigungszylinders 48 und dem Dämpfungsmoduls 10 möglich. Die gesamte Startvorrichtung 46, der Unterwasserlaufkörper 50 und insbesondere das Dämpfungsmodul 10 befinden sich in einer Ruhestellung.

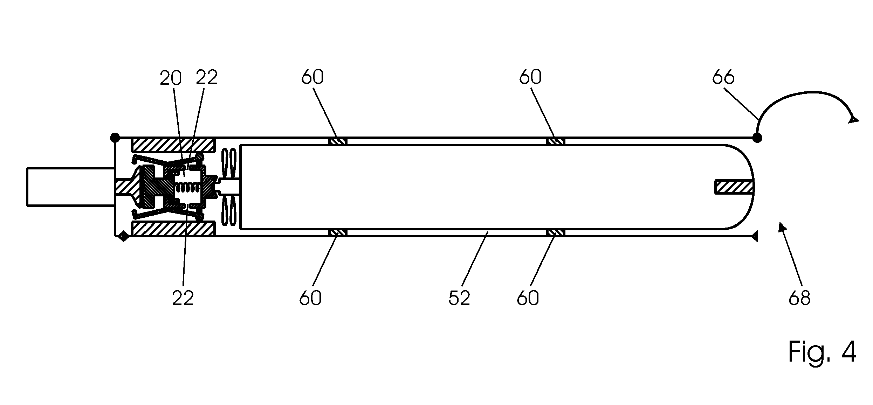

Fig. 4 zeigt erneut die Schnittdarstellung der Startvorrichtung 46 aus Fig. 2 und Fig. 3. In Fig. 4 ist nun jedoch die Abschussluke 66 der Startvorrichtung 46 geöffnet, sodass das Ausstoßrohr 52 mit Wasser oder Seewasser geflutet wird. Das Wasser oder Seewasser läuft durch die Öffnung 68 um die Haltemittel 60 herum bis zum Dämpfungsmodul 10. Durch die mit den Fluidverbindungsmitteln 22 hergestellten Fluidverbindungen läuft das Wasser oder Seewasser in die Kammer 20 des Dämpfungsmoduls 10. Nachdem der gesamte Innenraum des Ausstoßrohrs 52 mit Wasser oder Seewasser gefüllt ist, kann der Beschleunigungsvorgang zum Verbringen des Unterwasserlaufkörpers 50 in das Gewässer beginnen.

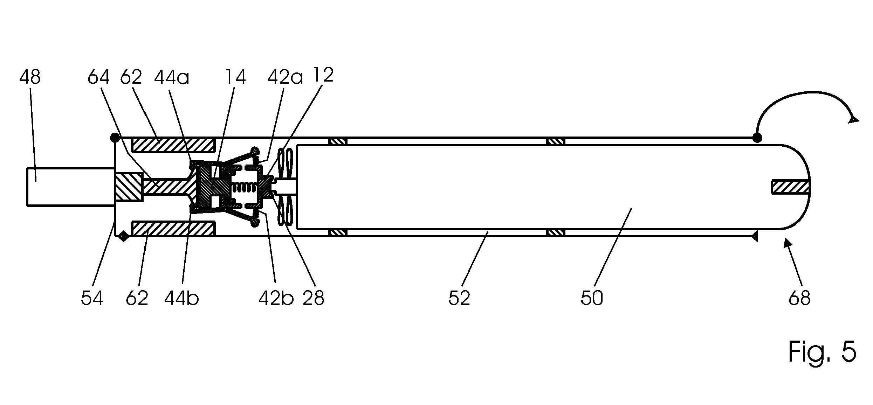

Fig. 5 zeigt die Startvorrichtung aus den Fig. 2 bis Fig. 4 beim Beschleunigen des Unterwasserlaufkörpers 50. Vom Beschleunigungszylinder 48 oder von der Kolbenstange 64 des Beschleunigungszylinders 48 wird ein Kraftstoß auf das Dämpfungsmodul 10 ausgeübt. Zu Beginn der Beschleunigungsbewegung wies dieser Kraftstoß seine höchste Erhöhung des Betrags seiner Kraft auf und hat den Kolben 14 des Dämpfungsmoduls 10 in den Zylinder 12 eingefahren, bis die durch die Fluidverbindungsmittel 22 geschaffenen Fluidverbindungen durch die Stellung oder Position des Kolbens 14 im Zylinder 12 weitestgehend verkleinert oder vermindert oder reduziert wurden. Somit wurde die plötzlich ansteigende Kraft zu Beginn der Beschleunigungsbewegung gedämpft, diese gedämpfte Kraft wurde mit der Fläche 28 des Dämpfungsmoduls 10 auf den Unterwasserlaufkörper 50 übertragen und der Unterwasserlaufkörper somit aus der Öffnung 68 beschleunigt.

Nachdem das Dämpfungsmodul 10 seine Ruhestellung zwischen den Abstandshaltern 62 verlassen hat, können die abgewinkelten Stäbe 38 an Ihren ersten Enden aus den Federn 42 ausfedern, sodass die Haken 44 der abgewinkelten Stäbe 38 sich mit der Kolbenstange 64 des Beschleunigungszylinder 48 verbinden. Nachdem der Unterwasserlaufkörper 50 durch die Öffnung 68 komplett ins Wasser verbracht worden ist, wird der Beschleunigungszylinder 48 wieder eingefahren und das Dämpfungsmodul 10 gelangt in seine Ruhestellung in den Bereich der Abstandshalter 62 zurück. Dadurch werden die Haken 44 wieder auseinandergerückt und ein Öffnen der Ladeluke 54 ist ohne Weiteres möglich.

Dank der Erfindung ist somit der Start von Unterwasserlaufkörpern ohne verstärkte Ausführung mit bereits verbauten Startvorrichtungen mit einem Beschleunigungszylinder zur Beschleunigung des Unterwasserlaufkörpers ohne aufwendigen Umbau der Startvorrichtungen möglich, ohne dabei den Unterwasserlaufkörper zu beschädigen.

## Patentansprüche

1. Dämpfungsmodul (10) zur Übertragung eines von einer Startvorrichtung (46) ausgeübten Kraftstoßes auf einen Unterwasserlaufkörper (50), wobei das Dämpfungsmodul (10) einen Zylinder (12), einen Kolben (14) und mindestens ein Fluidverbindungsmittel (22) aufweist, der Zylinder (12) mit dem Kolben (14) eine Kammer (20) umschließt und das mindestens eine Fluidverbindungsmittel (22) derart ausgebildet ist, um mindestens eine Fluidverbindung der Kammer (20) mit der Umgebung (24) des Dämpfungsmoduls (10) herzustellen und um im Falle eines erhöhten Kammerinnendrucks, der beim Einfahren des Kolbens (14) in den Zylinder (12) in der Kammer (20) erzeugt wird, den Volumenstrom durch die mindestens eine Fluidverbindung unterhalb von einem vorbestimmten Grenzwert zu halten, **dadurch gekennzeichnet, dass** das Dämpfungsmodul (10) eine Verbindungsvorrichtung (34) zum lösbaren Verbinden des Dämpfungsmoduls (10) mit einer Startvorrichtung (46) aufweist, wobei die Verbindungsvorrichtung (34) derart ausgebildet ist, um im Falle eines aus dem Bereich einer Ruhestellung gebrachten Dämpfungsmoduls (10), eine Verbindung mit einer sich im Bereich der Verbindungsvorrichtung (34) befindenden Startvorrichtung (46) herzustellen, und um im Falle eines in den Bereich der Ruhestellung zurückgebrachten Dämpfungsmoduls (10), die hergestellte Verbindung zu lösen.

2. Dämpfungsmodul nach Anspruch 1, **dadurch gekennzeichnet, dass** das mindestens eine Fluidverbindungsmittel (22) derartig im Dämpfungsmodul (10) angeordnet ist, um die Fluidverbindung oder Fluidverbindungen bei Einfahren des Kolbens (14) in den Zylinder (12) oberhalb einer vorbestimmten Einfahrtiefe durch die Position des Kolbens (14) im Zylinder (12) zu vermindern.

3. Dämpfungsmodul nach einem der vorherigen Ansprüche, **dadurch gekennzeichnet, dass** das Dämpfungsmodul (10) mindestens ein Paar Fluidverbindungsmittel (22) zum Auffüllen der Kammer (20) mit einem Fluid und zum Ablassen des Fluids aus der Kammer (20) aufweist, wobei die Fluidverbindungsmittel (22) mindestens eines Paares von Fluidverbindungsmitteln (22) an zueinander gegenüberliegenden Seiten der Kammer (20) angeordnet sind.

4. Dämpfungsmodul nach einem der vorherigen Ansprüche, **dadurch gekennzeichnet, dass** die Fluidverbindungsmittel (22) eine Filtereinrichtung zum Filtern von Verunreinigungen des Fluids in der Umgebung (24) vor oder bei dem Hineinfließen des Fluids aus der Umgebung (24) in die Kammer (20) aufweisen.

5. Dämpfungsmodul nach einem der vorherigen Ansprüche, **dadurch gekennzeichnet, dass** das Dämpfungsmodul (10) eine Rückstellfeder (32), insbesondere zum Ausfahren des Kolbens (14) aus dem Zylinder (12) bis zu einer Rückstelllage bei fehlender Kraftausübung auf den Kolben (14) und den Zylinder (12), aufweist.

6. Verfahren zum Übertragen eines von einer Startvorrichtung (26) ausgeübten Kraftstoßes auf einen Unterwasserlaufkörper (50) mittels eines Dämpfungsmoduls (10) mit einem Zylinder (12), einem Kolben (14) und mindestens einem Fluidverbindungsmittel (22), wobei mit dem Zylinder (12) und dem Kolben (14) eine Kammer (20) umschlossen, mit dem mindestens einen Fluidverbindungsmittel (22) mindestens eine Fluidverbindung der Kammer (20) mit der Umgebung (24) des Dämpfungsmoduls (10) hergestellt und mit dem mindestens einen Fluidverbindungsmittel (22) im Falle eines sich erhöhenden Kammerinnendrucks, der durch Einfahren des Kolbens (14) in den Zylinder (12) in der Kammer (20) erzeugt wird, der Volumenstrom durch die mindestens eine Fluidverbindung unterhalb von einem vorbestimmten Grenzwert gehalten wird, **dadurch gekennzeichnet, dass** im Falle eines aus dem Bereich einer Ruhestellung gebrachten Dämpfungsmoduls (10) mit einer Verbindungsvorrichtung (34) des Dämpfungsmoduls (10) eine Verbindung mit einer sich im Bereich der Verbindungsvorrichtung (34) befindenden Startvorrichtung (46) hergestellt wird und dass im Falle eines in den Bereich der Ruhestellung zurückgebrachten Dämpfungsmoduls (10), die hergestellte Verbindung gelöst wird.

7. Verfahren nach Anspruch 6, **dadurch gekennzeichnet, dass** die mindestens eine Fluidverbindung durch Einfahren des Kolbens (14) in den Zylinder (12) oberhalb einer vorbestimmten Einfahrtiefe durch die Anordnung des mindestens einen Fluidverbindungsmittels (22) und die in diesen Fällen erhaltenen Positionen des Kolbens (14) im Zylinder (12) vermindert werden.

8. Verfahren nach einem der Ansprüche 6 und 7, **dadurch gekennzeichnet, dass** das Dämpfungsmodul zum Auffüllen der die Kammer (20) mit mindestens einem Paar Fluidverbindungsmitteln (22), die an zueinander gegenüberliegenden Seiten der Kammer (20) angeordnet sind, mit einem Fluid aufgefüllt und das Fluid mit dem mindestens einen Paar Fluidverbindungsmitteln (22) aus der Kammer (20) abgelassen wird.

9. Verfahren nach einem der Ansprüche 6 bis 8, **dadurch gekennzeichnet, dass** Verunreinigungen des Fluids in der Umgebung (24) vor oder während des Hineinfließens des Fluids aus der Umgebung (24) in die Kammer mit einer Filtereinrichtung der Fluidverbindungsmittel (22) gefiltert werden.

10. Verfahren nach einem der Ansprüche 6 bis 9, **dadurch gekennzeichnet, dass** der Kolben (14) aus dem Zylinder (12) bis zu einer Rückstelllage bei fehlender Kraftausübung auf dem Kolben (14) und den Zylinder (12) mit einer Rückstellfeder (32) des Dämpfungsmoduls (10) ausgefahren wird.

## Claims

1. Damping module (10) for transmitting an impulse produced by a launch device (46) to an underwater mobile body (50), wherein the damping module (10) has a cylinder (12), a piston (14) and at least one fluid connection means (22), the cylinder (12) with the piston (14) encloses a chamber (20) and the at least one fluid connection means (22) is formed in such a way as to create at least one fluid connection of the chamber (20) with the environment (24) of the damping module (10), and in order, in the event of an increased internal chamber pressure, which is generated in the chamber (20) on entry of the piston (14) into the cylinder (12), to keep the volume flow through the at least one fluid connection below a predetermined limit value, **characterised by** that the damping module (10) has a connection device (34) for the detachable connection of the damping module (10) to a launch device (46), wherein the connection device (34) is formed in such a way as to create, in the case of a damping module (10) brought out of the region of a rest position, a connection with a launch device (46) located in the area of the connection device (34), and in the case of a damping module (10) retracted into the region of the rest position, to detach the connection created.

2. Damping module according to claim 1, **characterised by** that the at least one fluid connection means (22) is arranged in the damping module (10) in such a way as to reduce the fluid connection or fluid connections on entry of the piston (14) into the cylinder (12) above a predetermined entry depth due to the position of the piston (14) in the cylinder (12).

3. Damping module according to one of the preceding claims, **characterised by** that the damping module (10) has at least a pair of fluid connection means (22) for filling the chamber (20) with a fluid and for draining the fluid out of the chamber (20), wherein the fluid connection means (22) of at least one pair of fluid connection means (22) are arranged on opposing sides of the chamber (20).

4. Damping module according to one of the preceding claims, **characterised by** that the fluid connection means (22) have a filter device for filtering impurities of the fluid in the environment (24) before or on flowing of the fluid from the environment (24) into the chamber (20).

5. Damping module according to one of the preceding claims, **characterised by** that the damping module (10) has a reset spring (32), in particular for moving the piston (14) out of the cylinder (12) as far as a reset position when an exertion of force on the piston (14) and the cylinder (12) is ab-sent.

6. Method for transmitting an impulse produced by a launch device (26) to an underwater mobile body (50) by means of a damping module (10) with a cylinder (12), a piston (14) and at least one fluid connection means (22), wherein a chamber (20) is enclosed by the cylinder (12) and the piston (14), at least one fluid connection of the chamber (20) with the environment (24) of the damping module (10) is created by the at least one fluid connection means (22), and in the event of an increasing internal chamber pressure, which is created in the chamber (20) by entry of the piston (14) into the cylinder (12), the volume flow through the at least one fluid connection is kept below a predetermined limit value by the at least one fluid connection means (22), **characterised by** that, in the case of a damping module (10) brought out of the region of a rest position, a connection is created by a connection device (34) of the damping module (10) with a launch device (46) located in the area of the connection de-vice (34), and in the case of a damping module (10) retracted into the region of the rest position, the connection created is detached.

7. Method according to claim 6, **characterised by** that the at least one fluid connection is reduced due to entry of the piston (14) into the cylinder (12) above a predetermined entry depth by the arrangement of the at least one fluid connection means (22) and the positions of the piston (14) in the cylinder (12) obtained in these cases.

8. Method according to one of claims 6 and 7, **characterised by** that the damping module for filling the chamber (20) is filled with a fluid by at least a pair of fluid connection means (22), which are arranged on opposing sides of the chamber (20) and that the fluid is drained from the chamber (20) by the at least one pair of fluid connection means (22).

9. Method according to one of claims 6 to 8, **characterised by** that impurities of the fluid are filtered in the environment (24) before or during the flow of the fluid from the environment (24) into the chamber by a filter device of the fluid connection means (22).

10. Method according to one of claims 6 to 9, **characterised by** that the piston (14) is moved out of the cylinder (12) as far as a reset position when an exertion of force on the piston (14) and the cylinder (12) by a reset spring (32) of the damping module (10) is absent.

## Revendications

1. Module d'amortissement (10) destiné à transmettre une impulsion exercée par un dispositif de lancement (46) sur un corps sous-marin autopropulsé (50), le module d'amortissement (10) comportant un cylindre (12), un piston (14) et au moins un moyen de liaison fluidique (22), le cylindre (12) avec le piston (14) entourant une chambre (20) et l'au moins un moyen de liaison fluidique (22) étant réalisé de manière à établir au moins une liaison fluidique de la chambre (20) avec l'environnement (24) du module d'amortissement (10) et à maintenir le débit volumétrique à travers l'au moins une liaison fluidique en dessous d'une valeur limite prédéfinie en cas d'une pression intérieure accrue de la chambre, qui est générée dans la chambre (20) lors de l'introduction du piston (14) dans le cylindre (12), **caractérisé en ce que** le module d'amortissement (10) comporte un dispositif de liaison (34) destiné à relier de manière amovible le module d'amortissement (10) à un dispositif de lancement (46), le dispositif de liaison (34) étant réalisé de manière à établir une liaison avec un dispositif de lancement (46) se trouvant dans la zone du dispositif de liaison (34) si un module d'amortissement (10) est amené hors de la zone d'une position de repos, et à couper la liaison établie si un module d'amortissement (10) est ramené dans la zone de la position de repos.

2. Module d'amortissement selon la revendication 1, **caractérisé en ce que** l'au moins un moyen de liaison fluidique (22) est disposé dans le module d'amortissement (10) de manière à réduire la ou les liaison(s) fluidique(s) par la position du piston (14) dans le cylindre (12) lors de l'introduction du piston (14) dans le cylindre (12) au-delà d'une profondeur d'introduction prédéfinie.

3. Module d'amortissement selon l'une des revendications précédentes, **caractérisé en ce que** le module d'amortissement (10) comporte au moins une paire de moyens de liaison fluidique (22) destinés à remplir la chambre (20) avec un fluide et à évacuer le vide de la chambre (20), les moyens de liaison fluidique (22) d'au moins une paire de moyens de liaison fluidique (22) étant disposés sur des côtés opposés l'un à l'autre de la chambre (20).

4. Module d'amortissement selon l'une des revendications précédentes, **caractérisé en ce que** les moyens de liaison fluidique (22) comportent un mécanisme de filtrage destiné à filtrer des impuretés du fluide dans l'environnement (24) avant ou lors de l'entrée du fluide venant de l'environnement (24) dans la chambre (20).

5. Module d'amortissement selon l'une des revendications précédentes, **caractérisé en ce que** le module d'amortissement (10) comporte un ressort de rappel (32), en particulier destiné à sortir le piston (14) du cylindre (12) jusqu'à une position de retour en cas d'absence de l'application d'une force sur le piston (14) et le cylindre (12).

6. Procédé de transmission d'une impulsion exercée par un dispositif de lancement (26) sur un corps sous-marin autopropulsé (50) au moyen d'un module d'amortissement (10) comprenant un cylindre (12), un piston (14) et au moins un moyen de liaison fluidique (22), une chambre (20) étant entourée par le cylindre (12) et le piston (14), au moins une liaison fluidique de la chambre (20) avec l'environnement (24) du module d'amortissement (10) étant établie au moyen de l'au moins un moyen de liaison fluidique (22) et le débit volumétrique à travers l'au moins une liaison fluidique étant maintenu en dessous d'une valeur limite prédéfinie au moyen de l'au moins un moyen de liaison fluidique (22) en cas d'une augmentation de pression intérieure de la chambre, qui est générée dans la chambre (20) par l'introduction du piston (14) dans le cylindre (12), **caractérisé en ce que**, si un module d'amortissement (10) est amené hors de la zone d'une position de repos, une liaison est établie au moyen d'un dispositif de liaison (34) du module d'amortissement (10) avec un dispositif de lancement (46) se trouvant dans la zone du dispositif de liaison (34) et **en ce que**, si un module d'amortissement (10) est ramené dans la zone de la position de repos, la liaison établie est coupée.

7. Procédé selon la revendication 6, **caractérisé en ce que** l'au moins une liaison fluidique est réduite par l'introduction du piston (14) dans le cylindre (12) au-delà d'une profondeur d'introduction prédéfinie par la disposition de l'au moins un moyen de liaison fluidique (22) et par les positions du piston (14) dans le cylindre (12) obtenues dans ces cas.

8. Procédé selon l'une des revendications 6 et 7, **caractérisé en ce que** le module d'amortissement est rempli d'un fluide pour remplir la chambre (20) au moyen d'une paire de moyens de liaison fluidique (22), qui sont disposés sur des côtés opposés l'un à l'autre de la chambre (20), et le fluide est évacué de la chambre (20) au moyen de l'au moins une paire de moyens de liaison fluidique (22).

9. Procédé selon l'une des revendications 6 à 8, **caractérisé en ce que** des impuretés du fluide dans l'environnement (24) sont filtrées au moyen d'un mécanisme de filtrage des moyens de liaison fluidique (22) avant ou pendant l'entrée du fluide venant de l'environnement (24) dans la chambre.

10. Procédé selon l'une des revendications 6 à 9, **caractérisé en ce que** le piston (14) est sorti du cylindre (12) jusqu'à une position de retour au moyen d'un ressort de retour (32) du module d'amortissement (10) en cas d'absence de l'application d'une force sur le piston (14) et le cylindre (12).
